# EUROPEAN PATENT SPECIFICATION

(11) **EP 1 386 245 B1**
(45) Date of publication and mention of the grant of the patent: **03.10.2012**
(21) Application number: 02715024.2
(22) Date of filing: 04.03.2002
(51) Int. Cl.: G06F 11/07, G06T 11/20, H04L 12/24

(54) **SYSTEM AND METHOD FOR FILTERING MESSAGES BASED ON CONTEXT**
SYSTEM UND VERFAHREN ZUM FILTERN VON NACHRICHTEN AUF DER GRUNDLAGE VON KONTEXT
PROCEDE ET APPAREIL POUR FILTRER DES MESSAGES SUR LA BASE DU CONTEXTE

(30) Priority: 02.03.2001 US 273044 P; 07.09.2001 US 949101
(43) Date of publication of application: 04.02.2004
(73) Proprietor: CA, Inc., Islandia, NY 11749 (US)
(72) Inventor: VINBERG, Anders, Plandome Manor, NY 11030 (US)
(74) Representative: Dunlop, Hugh Christopher
(86) International application number: PCT/US2002/006443
(87) International publication number: WO 2002/086750

(56) References cited:
- US-A- 4 464 543
- US-A- 5 696 486
- US-A- 5 958 012
- US-A- 6 052 722
- US-A- 6 167 448
- 'Information technology - Open Systems Interconnection - Systems Management: Event report management function; X.734' ITU-T STANDARD IN FORCE 10 September 1992, GENEVA, CH, XP017404181
- 'Information technology - Open Systems Interconnection - Systems Management: Alarm reporting function; X.733' ITU-T STANDARD IN FORCE 10 February 1992, GENEVA, CH, XP017404176

## Description

### Technical Field

The present application generally relates to the field of monitoring and managing ongoing processes. More specifically, the present application relates to systems and methods for generating alert and diagnostic messages for the attention of human operators.

### Background

Systems that manage computer or network systems, or other systems with embedded computer technology, commonly monitor various system parameters for the purpose of detecting problems and alerting a human to the problem. Various techniques can be employed to monitor ongoing processes. The monitored values can be analyzed in various ways, including comparison with thresholds, correlation of several values, and correlation of values over time to discover problems, unprecedented situations, or other events.

Some systems use various techniques to predict events before they occur. One such system is described in commonly owned U.S. Patent No. 6,327,550.

In such systems one response to the discovery or prediction is to bring the event to the attention of a human operator. For example, these management systems can issue a text message alert and different techniques may be employed for presenting this text message to the operator, such as a Windows dialog box, monitoring consoles, event logs, email messages, pager messages. The alert can also be a provided as an audio message through loudspeakers, headsets, or a telephone. An example of a system that provides audio alert messaging is described in commonly owned, concurrently filed U.S. Utility Application entitled "Method and Apparatus for Generating and Recognizing Speech as a User Interface Element in Systems and Network Management".

In large management systems with many managed components and/or networks and a high level of activity, the management systems may generate a large number of alert messages. Some alert messages may be more important than others, but are typically issued because the alert functionality of such management systems is not open to modification. Other messages may be redundant because several management systems may independently detect the consequences of an event. As a result, current management systems include various techniques for filtering such alert messages based on various rules unrelated to the content of the message.

For example, some conventional management systems designate the severity of a detected or predicted event as the filtering rule. This permits the management system to present only critical messages, or messages about events above a certain level of severity. Other systems correlate alert messages over time or over several objects as a filtering rule. This permits the recognition that a message may indicate a critical problem, even though it may not indicate such criticality by itself, e.g., a minor error may be more critical if it occurs several times in a short time period.

Even after messages have been filtered so only meaningful messages remain, individual users may be interested in different categories of messages. Some management systems include various techniques for filtering alert messages presented to particular individuals, such as messages related to one or more groups of managed components or networks that denote some sort of business process. An example of such a management system is described in U.S. Patent No. 5,958,012.

An apparatus and a method for receiving alarms from multiple network management servers and applying a plurality of policy-based filters to the alarms can be found in U.S. Patent No. 5,696,486. A network that compares messages to predefined alarm conditions can be found in U.S. Patent No. 4,464,543.

### Summary

In accordance with the present invention there is provided: a method for reporting an alert condition in accordance with claim 1; a system for reporting an alert condition in accordance with claim 8; and a computer readable medium in accordance with claim 15.

The present disclosure provides management systems and methods with improved alert messaging. The present disclosure also provides alert systems and methods capable of filtering alert messages generated by management systems to report operator desired messages. According to one example a method for reporting an alert condition is disclosed which includes defining alert filter criteria, identifying an alert condition and analyzing one or more properties of the alert condition and the alert filter criteria to determine whether or not to report the alert condition. The method further includes reporting the alert condition if the determination is to report the alert condition.

According to another example, a system for reporting an alert condition is disclosed. The system includes a filter criteria maintenance module capable of maintaining filter alert criteria, an alert condition detector capable of identifying one or more alert conditions, an alert condition filter capable of filtering identified alert conditions based on the alert filter criteria, and an alert notification module for reporting the filtered alert conditions.

According to another example, a system for reporting an alert condition is disclosed. The system includes means for maintaining filter alert criteria, means for identifying one or more alert conditions, means for filtering the one or more identified alert conditions based on the alert filter criteria and means for reporting the filtered alert conditions.

According to another alternative example, a computer-readable storage medium is disclosed. The medium is encoded with processing instructions for reporting an alert condition, including instructions for defining alert filter criteria and instructions for identifying an alert condition. The medium also includes computer readable instructions for analyzing one or more properties of the alert condition based on the alert filter criteria and for determining whether to report the alert condition. The medium further includes instructions for selectively reporting the alert condition.

### Brief Description of the Drawings

For a more complete understanding of the present methods and systems, reference is now made to the following description taken in conjunction with the accompanying drawings in which like reference numbers indicate like features and wherein:
Figure 1A illustrates an exemplary enterprise system;
Figure 1B illustrates an exemplary management system topology that may be managed in accordance with the disclosed methodology;
Figure 2 is a block diagram illustrating exemplary components for implementing one embodiment of an alert system methodology according to the present disclosure;
Figure 3A is a diagram illustrating exemplary system topology objects used by one or more embodiments of the management system according to the present disclosure ;
Figure 3B is a diagram illustrating exemplary alert filter criteria objects used by one or more embodiments of the management system according to the present disclosure;
Figure 3C is a diagram illustrating exemplary alert condition objects used by one or more embodiments of the management system according to the present disclosure; and
Figure 4 is an exemplary flow diagram of one method for filtering alert conditions in accordance with one embodiment of the present disclosure.

### Detailed Description

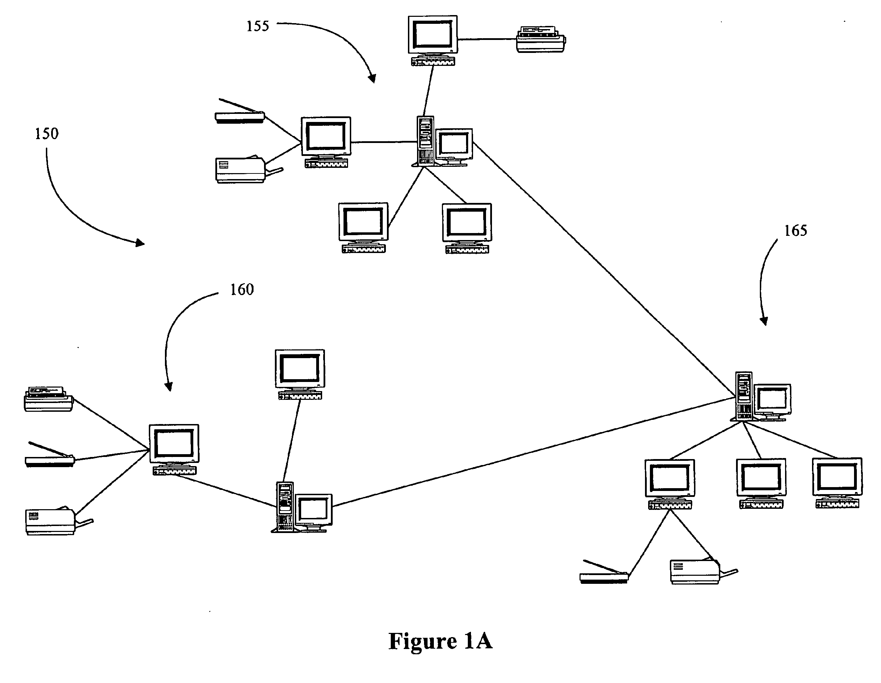

An exemplary IT enterprise is illustrated in Figure 1A. The IT enterprise **150** includes local area networks **155, 160** and **165.** IT enterprise further includes a variety of hardware and software components, such as workstations, printers, scanners, routers, operating systems, applications, and application platforms, for example. Each component of IT enterprise may be monitored and managed in accordance with the present disclosure.

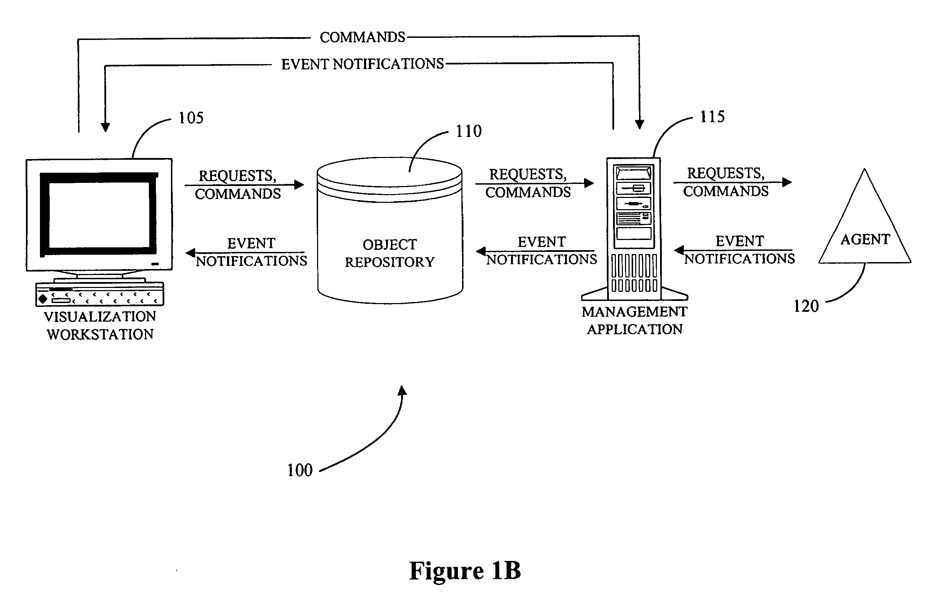

The various components of an exemplary management system 100 topology that can manage an IT enterprise in accordance with the present disclosure are shown in Figure 1B. The management system **100** includes at least one visualization workstation **105,** an object repository **110,** one or more management applications **115,** and one or more management agents **120** associated with each management application **115.**

The visualization workstation **105** provides a user access to various applications including a network management application **115.** Workstation **105** interacts with an object repository **110** which stores and delivers requests, commands and event notifications. Workstation **105** requests information from object repository **110,** sends commands to the object repository, and gets notification of events, such as status changes or object additions from it. The object repository **110** receives request information from the management application **115,** which is fed by the management agents **120** responsible for monitoring and managing certain components or systems in an IT enterprise.

The management application **115** maintains object repository **110,** in part, to keep track of the objects under consideration. The object repository **110** may be a persistent store to hold information about managed components or systems, such as a database. In an alternative embodiment, the management application **115** and object repository **110** may be integrated into a single unit that can hold information about managed components in volatile memory and perform the tasks of the management application.

As shown, one architectural aspect of the present system is that in normal operation, the visualization workstation **105** interacts primarily with the object repository **110.** This reduces network traffic, improves the performance of graphical rendering at the workstation, and reduces the need for interconnectivity between the visualization workstation **105** and a multitude of management applications **115,** their subsystems and agents **120** existing in the IT enterprises. Of course, embodiments having other configurations of the illustrated components are contemplated, including a stand-alone embodiment in which the components comprise an integrated workstation.

In addition to handling requests, commands and notifications, object repository **110** may also handle objects describing the structure and operation of the management system **100.** Such objects may describe the momentary state, load, and performance of the components and/or systems. Such objects may be populated using a manual process or an automatic discovery utility.

The alert filtering criteria may be, for example, the severity of an event, the relative importance of the object that exhibits the event, the urgency of the notification and the likelihood that the event condition will occur. To illustrate the interplay of severity, importance, urgency and risk, consider two potential problems associated with a personal computer and attached peripherals. The first potential problem might be an 80% likelihood that there will be a shortage of paper for the printer. The second potential problem might be a 2% likelihood that there will be a hard disk drive failure. The first problem has a high risk and low severity while the second potential problem has a relatively low risk but high severity. Determining the importance and urgency of each potential problem might require additional information regarding the use of the personal computer. For example, if a major use of a computer is printing, the urgency and importance the first problem might be higher. If the computer is primarily used for data storage, acting as a server for other computers running mission critical applications, the importance of the second problem might be higher, while the urgency might be moderate.

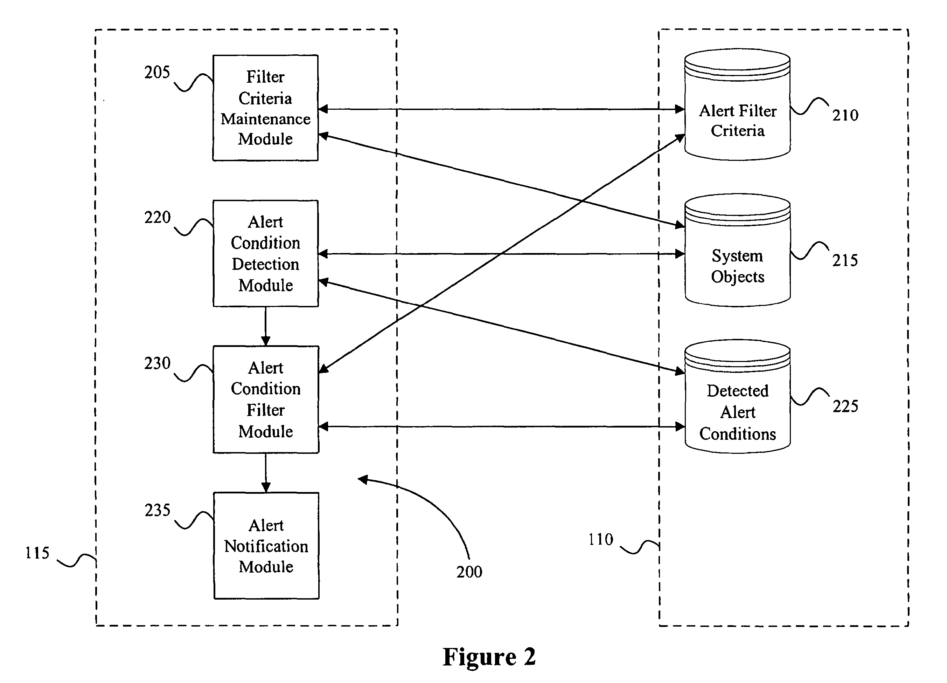

Referring now to Figure 2, components forming one embodiment of an alert system according to the present disclosure is shown. The alert system **200** may be a distributed system formed by, for example, management application **115** and object repository **110** shown in Figure 1. Alternatively, as noted above, the management system **115** may incorporate the object repository **110** and the alert system **200** may be an integrated system incorporated into management application **115.** In the embodiment of Figure 2, the alert system **200** includes a filter criteria maintenance module **205,** an alert condition detection module **220,** an alert condition filter module **230,** and an alert notification module **235.** The filter criteria maintenance module **205** enables an operator to define criteria under which alert notifications may be reported. The alert filter criteria are stored in the object repository **110** as a set of alert filter criteria objects in database **210.** The filter criteria maintenance module **205** may further enable an operator to add, delete, update or otherwise maintain system objects in database **215** that define the topology of IT enterprise **150.** Maintenance of the system objects in database **215** may include, for example, defining the importance of a system or network component, or defining dependency or containment relationships between and among several system or network components.

According to one embodiment, the alert filter criteria objects in database **210** direct the alert system **200** how to react to an alert message based on both the severity of an alert condition and on the importance of the affect of the alert condition on system or network component(s). The alert filter criteria objects in database **210** may further direct the system to take the urgency of an alert condition into account, and in the case of a prediction, the alert system **200** may take into account the level of risk.

Because the alert system **200** enables tracking the importance of objects, the severity and urgency of alert conditions and the risk for predicted alert conditions, the alert system **200** can use any or all of these four metrics to filter and report alert messages or notifications intelligently.

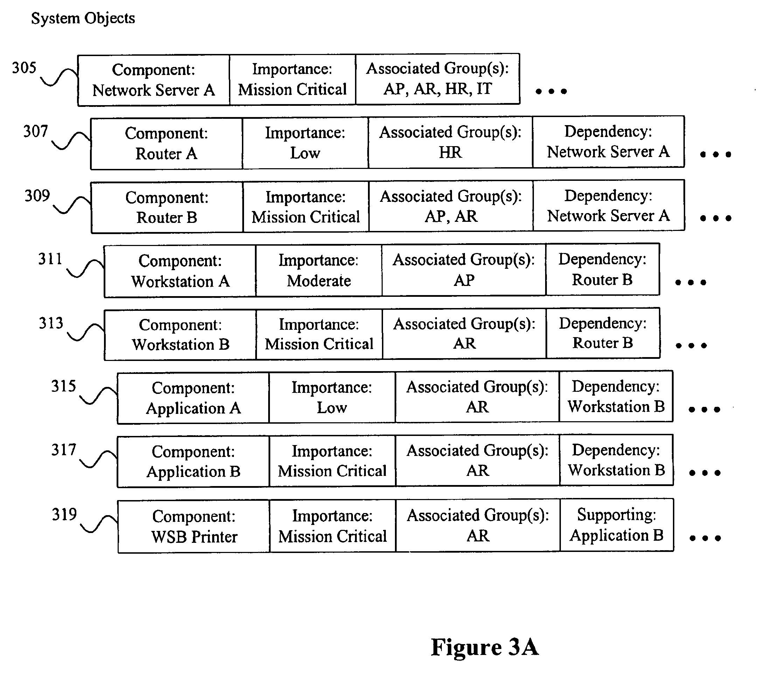

Figure 3A illustrates portions of several exemplary system objects that may be maintained by, for example, filter criteria maintenance module **205.** The illustrated objects relate to a topology of IT enterprise **150.** In this exemplary illustration, object **305** represents a "network server A" which utilizes "router A" and "router B", represented by objects **307** and **309** respectively, to communicate with other network components. For example, "network server A" utilizes "router B" to communicate with "workstation A" and workstation B", represented by objects **311** and **313** respectively. Workstation B is running two applications represented by objects **315** and **317,** and "workstation B" has an associated printer "WSB printer" represented by object **319.**

The alert system according to the present disclosure can use the level of importance of each object to facilitate context-based filtering. Instances may occur where the importance of an alert condition is not readily apparent from the object. For example, a database server may not always be mission-critical, and it may depend on whether the database server is being used by an application having an importance level of mission critical. Of course, human operators may know how the database server is being used and can manually enter the appropriate levels of importance for a particular server. Manual entry of importance levels, however, is cumbersome and inefficient, especially in situations where the relationships between different components may be indirect. For example, a database server may be shifted from a moderate level of importance to a mission critical level of importance. If the shift is not detected by the operator, the old lower importance level may inadvertently be retained. Another example of the inefficiency of manual entry of importance level can occur is where the traffic between an application running on a workstation and a database server depends on other network components, e.g., routers. In such situations, the database server, other network components, and the human operator may not be aware of such indirect relationships and consequently may neglect to manually adjust the importance levels.

Thus, according to one embodiment of the present system, if the management system can detect such dependency relationships, the importance rating can be influenced by dependencies.

The objects illustrated in Figure 3A illustrate an example of such inheritance of importance properties based on a dependency relationship. As shown, Application B **317** is a mission critical application so that workstation B **313,** the workstation upon which successful execution of the mission critical application depends, also assumes an importance level of "mission critical". Further, the router **309** and the network server **305,** upon which the application depends, are also assigned "mission critical" importance. As a result, the alert system **200** can support the use of dependency relationships to propagate or inherit importance levels.

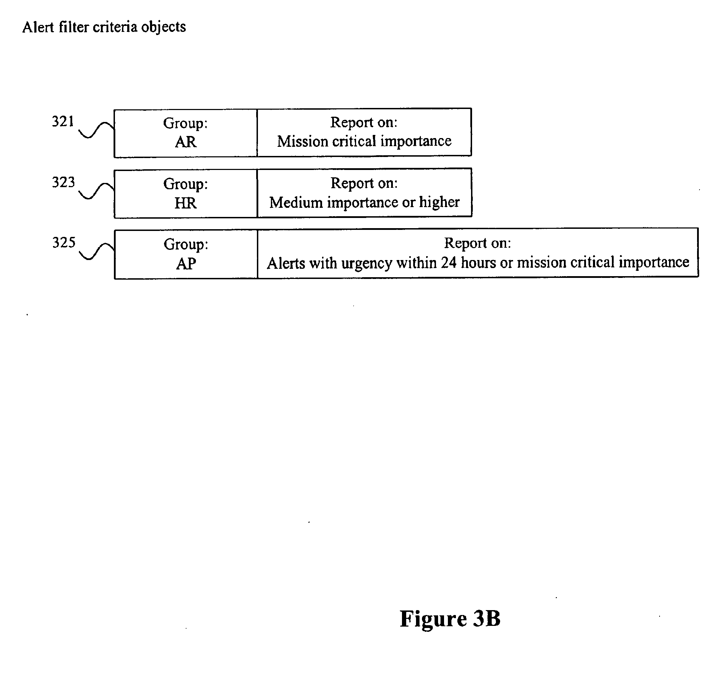

Figure 3B illustrates several exemplary alert filter criteria objects that may be maintained by filter criteria maintenance module **205,** and used by the alert system **200** to determine whether or not to report an alert condition to an operator. In this exemplary embodiment, each alert filter criteria is assigned a group ID which designates a system component subject to an alert condition. Although the objects of Figure 3B are indexed by group, alternate indexing schemes, such as by operator ID or workstation ID, for example, may also be used.

In the exemplary embodiment of Figure 3B, alert filter criteria object **321** represents a filter rule associated with alerts affecting an accounts receivable business group having a group ID "AR". Alert filter criteria object **321** directs the alert system **200** to report alerts affecting an AR function only if the alert has an importance level of "mission critical". Alert filter criteria object **323** represents a filter rule associated with alerts affecting a human resources business division having a group ID "HR". Alert filter criteria object **323** directs the system to report alerts affecting an HR function only if the alert has an importance level of "medium or higher."

Alert filter criteria object **325** represents a filter rule associated with alerts affecting an accounts payable business division having a group ID "AP". Alert filter criteria object **325** directs the system to report alerts affecting an AP function only if the alert has an importance level of "mission critical" or if the alert has an urgency level of 24 hours or less.

Referring again to Figure 2, the alert condition detection module **220** is used to detect actual or potential alert conditions. Alert condition detection module **220** refers to the system objects in database **215** of object repository **110** among other relevant factors to determine whether an alert condition exists, and generates and stores an alert condition object in database **225.**

In one embodiment, alert condition detection module **220** assigns a severity property to each detected alert condition. This may be accomplished using the principles of the predictive management system described in commonly owned U.S. Patent Number 6,327,550. Risk and urgency properties are also assigned. The urgency property may represent the amount of time remaining before action must be taken or it may represent a rating inversely related to the amount of time remaining. As previously described, module **220** also assigns an importance property to the alert condition object. The importance property represents a measure of the importance of the object, indicated, for example, along some suitable scale, such as 0-5.

The importance property may be determined in any of a number of ways. For example, the importance property may be manually assigned to each class of objects, so that each object of that class inherits the importance property of the class. Alternatively, classes of objects may be arranged in an inheritance hierarchy, so that a subclass (such as "NT server") may inherit the importance rating of its parent class (such as "NT system"). In accordance with another example of importance level assignment, individual objects may be manually assigned an importance rating that overrides the rating of the class.

According to another way that the importance property may be assigned, various subsystems, such as for example a job scheduling system, may automatically set the importance properties of individual objects based on some suitable determination, overriding the rating of the class. In yet another example, the importance property may be propagated up a containment hierarchy based on some suitable algorithm. For example, importance may be propagated up based on the highest value among the contained components, so a component that contains several sub-components assumes the highest importance rating of the sub-components it contains.

The importance property may also be propagated along dependency relationships based on some suitable algorithm. For example, the importance property may be propagated along a "depends on" direction of a relationship with a "largest-value" aggregation function, so if an important application server depends on a database server, then the database server gets the same importance property as the application server unless some other propagation gives it a higher rating.

The detected alert condition objects of database **225** are referenced by alert condition filter module **230** and analyzed in accordance with the applicable alert filter criteria from database **210** to determine whether the detected alert condition qualifies to be reported to an operator. If alert condition filter module **230** determines that a detected alert condition merits reporting, the alert notification module **235** is directed to report the alert notification to an appropriate operator.

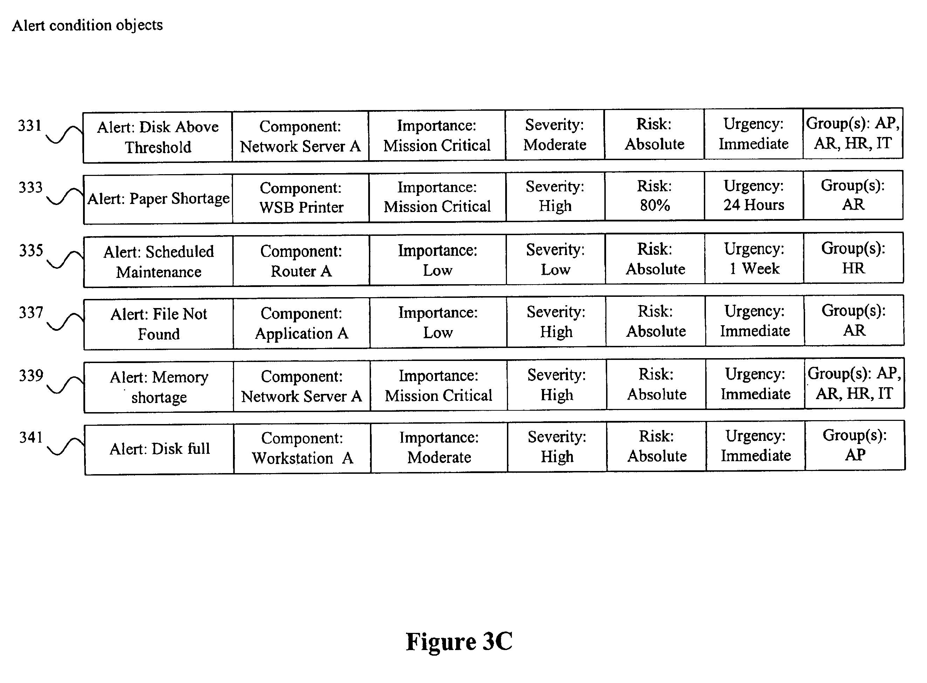

Figure 3C illustrates several exemplary alert condition objects which may be generated by alert condition detection module **220.** Each illustrated alert condition object represents an actual or projected alert condition that may be reported to an operator by alert notification module **235** based on the alert filter criteria **210.**

Referring to Figures 3A and 3C, alert condition object **331** is an example of an actual alert condition. Object **331** represents an alert condition in which the used disk space associated with network server A has exceeded a predetermined acceptable threshold. The importance level of the alert is "mission critical" because network server A **305** supports the mission critical application **317** running on workstation B **313.** Alert condition detection module **220** determined the severity to be moderate, due to the fact that there is still available storage space on the disk, and further determined the risk to be "absolute" because the condition exists. Alert detection module **220** also determined that the urgency for this alert is immediate. Due to the relationship of network server A to the other components in the system, the affected groups include AP, AR, HR and IT.

Alert condition object **333** is an example of a potential or projected alert condition. Object **333** represents an alert condition in which there is a potential paper shortage for WSB printer. The importance level of the alert is "mission critical" because WSB printer **319** is used by the mission critical application **317** running on workstation B **313.** Alert condition detection module **220** determined the severity to be high, due to the fact that while there is still available paper, the lack of paper would prevent the proper completion of Application B. Alert condition detection module **220** also determined that the likelihood that the condition will occur is 80% and that the urgency for this alert is "24 hours". Due to the relationship of the WSB printer to the other components in the system. The group AR is the only affected group.

As discussed above, the importance level of an object may be propagated along dependency relationships. The alert condition objects of Figure 3C illustrate that in one embodiment, the importance levels, severity, risk and urgency may be propagated among objects may also be propagated along containment relationships. In other words, so a computer or other component that hosts or provides service to an important process is also important, as is the subnetwork within which the computer resides.

Of course, the use of severity and importance properties for filtering messages requires some care, when properties are propagated. Although the importance and severity properties illustrated herein have been qualitative, in an alternative embodiments such properties could be quantitative, e.g. numerical.

In such an embodiment, filter criteria maintenance module **205** may support filter criteria, and alert condition filter module **230** could filter alert condition objects, based on the sum or product of the numerical values representing severity and importance levels. As an example, consider a situation in which sub-network S1 contains computers C1 and C2. In this example, computer C1 is performing an important function and has a "very high" importancelevel, but a "normal" severity level. Computer C2 is a test system and has a "critical" severity level, but a "low" importancelevel. If severity and importance are independently propagated, then the subnetwork S 1 would have both the "critical" severity and the "very high" importance levels, which might lead the message filtering system to report an alert for sub-network S1. However, if the important computer C1 is functioning properly, and the unimportant test computer C2 exhibits problems, there is no cause for concern regarding sub-network S1 and notification of the alert may not be needed. Therefore, according to an alternative embodiment of the present alert system, a filtering expression, such as, for example "severity + importance", can be propagated separately so that alerts are reported for those alerts that meet this sum or difference filtering condition.

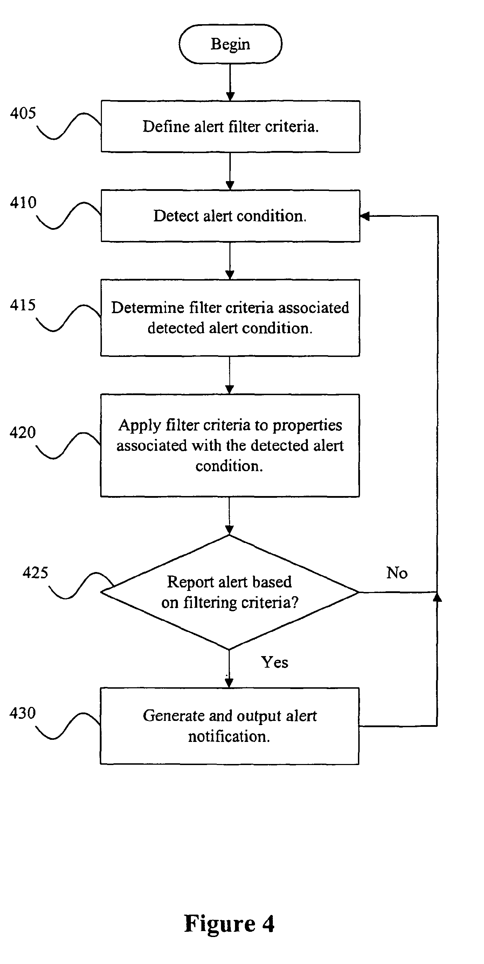

Referring now to Figure 4, there is illustrated an exemplary flow diagram of methodology for filtering alert conditions in accordance with one embodiment of the present disclosure. At block **405,** alert filter criteria are defined. The filter criteria are utilized to determine whether to report a detected filter condition, and they may include importance, severity, urgency and/or risk properties. The filter criteria may further include one or more identifiers representing a user, a workstation, an interest group or a business process.

At block **410,** an alert condition is detected. The alert condition may be an existing condition that requires operator attention, a warning regarding an existing condition or a predicted/potential condition that may require operator attention. Any technique known to those of skill in the art may be used in the detection of actual or potential alert conditions.

In addition to the detection of an alert condition, block **410** may also include use propagation algorithms to determine certain properties of the alert condition as represented by an alert condition object, such as for example, importance, severity, urgency and/or risk. In addition, associated identifiers such as, for example, an interest group identifier, may also be propagated to the alert condition object. The propagation may occur, for example, along dependency relationships or along containment relationships.

At block **415,** the filter criteria associated with the detected alert condition are determined. The association between the filter criteria and the detected alert condition may be based on one or more elements such as, for example, interest group identifier, user identifier or , system component identifier. The association may be based on any factor that would be relevant in reporting the detected alert condition.

At block **420,** the filter criteria is applied to the relevant properties of the detected alert condition. Based on the application of the filter criteria to the detected alert condition, a determination is made at block **425** whether or not to report the detected alert condition. If the properties of the detected alert condition fall within the alert filtering criteria, an alert notification is generated and output to an appropriate operator at block **430.** Otherwise, the detection and filtering steps are repeated to continually report alert conditions as they arise.

Accordingly, it is to be understood that the drawings and description in this disclosure are proffered to facilitate comprehension of the methods and systems, and should not be construed to limit the scope thereof. It should be understood that various changes, substitutions and alterations can be made without departing from the scope of the disclosed methods systems.

## Claims

1. A method for reporting an alert condition within an enterprise computer system; comprising:
defining (405) alert filter criteria, wherein a particular alert filter criterion is associated with a group identifier that designates a component of said enterprise computer system (150);
identifying an alert condition associated with a first component of the enterprise computer system (150);
determining an urgency level, a severity level, and at least one group identifier associated with the alert condition;
identifying at least one alert filter criterion associated with the at least one determined group identifier;
determining whether the alert condition satisfies the at least one identified alert filter criterion based at least in part on the urgency level or the severity level; and
if the alert condition satisfies the at least one identified alert filter criterion, reporting the alert condition.

2. The method of claim 1, further comprising determining an importance level associated with the alert condition, wherein the determination of whether the alert condition satisfies the at least one identified alert filter criterion is based at least in part on the importance level.

3. The method of claim 1, wherein identifying an alert condition includes identifying a potential alert condition.

4. The method of claim 1, further comprising:
determining a level of risk associated with the alert condition, wherein the determination of whether the alert condition satisfies the at least one identified alert filter criterion is based at least in part on the level of risk.

5. The method of claim 1, wherein:
the first component is represented by a first object (305, 307, 309, 311, 313, 315, 317, 319);
a second component of the enterprise system (150) is represented by a second object (305, 307, 309, 311, 313, 315, 317, 319), the second component having a relationship with the first component, the second object depends upon the first object, the second object associated with a particular severity level; and
the determination of the severity level associated with the alert condition is based on the particular severity level associated with the second object.

6. The method of claim 1, wherein identifying the alert condition includes:
identifying a first object (305, 307, 309, 311, 313, 315, 317, 319) representing the first component associated with the alert condition;
identifying a second object (305, 307, 309, 311, 313, 315, 317, 319) representing a second component in the enterprise computer system (150) having a dependency relationship to the first component; and
propagating a property of the second object to the first object such that the first object inherits the property of the second object.

7. The method of claim 1, wherein identifying an alert condition includes:
identifying a first object (305, 307, 309, 311, 313, 315, 317, 319) representing the first component associated with the alert condition;
identifying a second object (305, 307, 309, 311, 313, 315, 317, 319) representing a second component in the enterprise computer system (150) having a containment relationship to the first component; and
propagating a property of the first object to the second object such that the second object inherits the property of the first object.

8. A system for reporting an alert condition (331), comprising:
a filter criteria maintenance module (205) operable to maintain alert filter criteria, wherein a particular alert filter criterion is associated with a group identifier that designates a component of an enterprise computer system (150);
an alert condition detector (220) operable to:
identify at least one alert condition associated with a component of the enterprise computer system (150);
determine an urgency level, a severity level, and at least one group identifier associated with the at least one alert condition;
an alert condition filter operable to:
identify at least one alert filter criterion associated with the at least one group identifier; and
determine whether the at least one alert condition satisfies the at least one identified alert filter criterion based at least in part on the urgency level or the severity level; and
an alert notification module (235) that is operable to report the alert condition if the at least one alert condition satisfies the at least one identified alert filter criterion.

9. The system of claim 8, wherein the alert condition detector (220) is further operable to determine an importance level associated with the at least one alert condition; and
the determination of whether the at least one alert condition satisfies the at least one identified alert filter criterion is based at least in part on the importance level.

10. The system of claim 8, wherein the alert condition detector (220) identifies a potential alert condition.

11. The system of claim 8, wherein the alert condition detector (220) is further operable to determine a level of risk associated with a potential alert condition.

12. The system of claim 8, wherein:
the first component is represented by a first object (305, 307, 309, 311, 313, 315, 317, 319);
a second component of the enterprise computer system (150) is represented by a second object (305, 307, 309, 311, 313, 315, 317, 319), the second component having a relationship with the first component, the second object depends upon the first object, the second object associated with a particular severity level; and
the determination of the severity level associated with the alert condition is based on the particular severity level associated with the second object.

13. The system of claim 8, wherein the alert condition filter is operable to propagate a property of a first object (305, 307, 309, 311, 313, 315, 317, 319) to a property of a second object (305, 307, 309, 311, 313, 315, 317, 319) based on a dependency relationship between the first and second objects such that the second object inherits the property of the first object, wherein the first and second objects represent first and second components of the enterprise computer system (150).

14. The system of claim 8, wherein the alert condition filter is operable to propagate a property of a first object (305, 307, 309, 311, 313, 315, 317, 319) to a property of a second object (305, 307, 309, 311, 313, 315, 317, 319) based on a containment relationship between the first and second objects such that the second object inherits the property of the first object, wherein the first and second objects represent first and second components of the enterprise computer system (150).

15. A computer-readable storage medium including code for reporting an alert condition, the code operable to perform the method of any one of claims 1 to 7.

## Patentansprüche

1. Verfahren zum Melden einer Alarmbedingung innerhalb eines Unternehmenscomputersystems, Folgendes aufweisend:
Definieren (405) von Alarmfilterkriterien, wobei ein bestimmtes Alarmfilterkriterium mit einem Gruppenidentifikator verbunden ist, der einen Bestandteil des Unternehmenscomputersystems (150) bezeichnet;
Identifizieren einer Alarmbedingung in zusammenhang mit einem ersten Bestandteil des Unternehmenscomputersystems (150);
Bestimmen eines Dringlichkeitsniveaus, eines Schwereniveaus und mindestens eines Gruppenidentifikators, der mit der Alarmbedingung verbunden ist;
Identifizieren mindestens eines Alarmfilterkriteriums, das mit dem mindestens einen bestimmten Gruppenidentifikator verbunden ist;
Bestimmen, ob die Alarmbedingung das mindestens eine identifizierte Alarmfilterkriterium mindestens zum Teil beruhend auf dem Dringlichkeitsniveau oder dem Schwereniveau erfüllt; und
wenn die Alarmbedingung das mindestens eine identifizierte Alarmfilterkriterium erfüllt, Melden der Alarmbedingung.

2. verfahren nach Anspruch 1, das ferner das Bestimmen eines Bedeutungsniveaus, das mit der Alarmbedingung verbunden ist, aufweist, wobei das Bestimmen, ob die Alarmbedingung das mindestens eine identifizierte Alarmfilterkriterium erfüllt, mindestens zum Teil auf dem Bedeutungsniveau beruht.

3. Verfahren nach Anspruch 1, wobei das Identifizieren einer Alarmbedingung das Identifizieren einer potentiellen Alarmbedingung umfasst.

4. Verfahren nach Anspruch 1, ferner Folgendes aufweisend:
Bestimmen eines Gefahrenniveaus, das mit der Alarmbedingung verbunden ist, wobei das Bestimmen, ob die Alarmbedingung das mindestens eine identifizierte Alarmfilterkriterium erfüllt, mindestens zum Teil auf dem Gefahrenniveau beruht.

5. Verfahren nach Anspruch 1, wobei:
der erste Bestandteil durch ein erstes Objekt (305, 307, 309, 311, 313, 315, 317, 319) dargestellt ist;
ein zweiter Bestandteil des Unternehmenssystems (150) durch ein zweites Objekt (305, 307, 309, 311, 313, 315, 317, 319) dargestellt ist, wobei der zweite Bestandteil eine Beziehung mit dem ersten Bestandteil hat, wobei das zweite Objekt von dem ersten Objekt abhängt, wobei das zweite Objekt mit einem bestimmten Schwereniveau verbunden ist, und
das Bestimmen des Schwereniveaus, das mit der Alarmbedingung verbunden ist, auf dem besonderen Schwereniveau, das mit dem zweiten Objekt verbunden ist, beruht.

6. Verfahren nach Anspruch 1, wobei das Identifizieren der Alarmbedingung Folgendes umfasst:
Identifizieren eines ersten Objekts (305, 307, 309, 311, 313, 315, 317, 319), das den ersten Bestandteil, der mit der Alarmbedingung zusammenhängt, darstellt;
Identifizieren eines zweiten Objekts (305, 307, 309, 311, 313, 315, 317, 319), das einen zweiten Bestandteil in dem Unternehmenscomputersystem (150) darstellt, der eine Abhängigkeitsbeziehung mit dem ersten Bestandteil hat, und
Verbreiten einer Eigenschaft des zweiten Objekts zu dem ersten Objekt, so dass das erste Objekt das Eigentum des zweiten Objekts erbt.

7. Verfahren nach Anspruch 1, wobei das Identifizieren einer Alarmbedingung Folgendes aufweist:
Identifizieren eines ersten Objekts (305, 307, 309, 311, 313, 315, 317, 319), das den ersten Bestandteil, der mit der Alarmbedingung verbunden ist, darstellt;
Identifizieren eines zweiten Objekts (305, 307, 309, 311, 313, 315, 317, 319), das einen zweiten Bestandteil in dem Unternehmenscomputersystem (150) darstellt, der eine Einschließungsbeziehung mit dem ersten Bestandteil hat, und
Verbreiten einer Eigenschaft des ersten Objekts zu dem zweiten Objekt, so dass das zweite Objekt die Eigenschaft des ersten Objekts erbt.

8. System zum Melden einer Alarmbedingung (331), Folgendes aufweisend:
ein Filterkriterienwartungsmodul (205), das betrieben werden kann, um Alarmfilterkriterien zu warten, wobei ein bestimmtes Alarmfilterkriterium mit einem Gruppenidentifikator, der einen Bestandteil eines Unternehmenscomputersystems (150) bezeichnet, verbunden ist;
einen Alarmbedingungsdetektor (220), der betrieben werden kann, um:
mindestens eine Alarmbedingung, die mit einem Bestandteil des Unternehmenscomputersystems (150) zusammenhängt, zu identifizieren,
ein Dringlichkeitsniveau, ein Schwereniveau und mindestens einen Gruppenidentifikator, der mit der mindestens einen Alarmbedingung verbunden ist, zu bestimmen;
ein Alarmbedingungsfilter, das betrieben werden kann, um:
mindestens ein Alarmfilterkriterium, das mit dem mindestens einen Gruppenidentifikator verbunden ist, zu identifizieren und
zu bestimmen, ob die mindestens eine Alarmbedingung das a mindestens eine identifizierte Alarmfilterkriterium, das mindestens zum Teil auf dem Dringlichkeitsniveau oder dem Schwereniveau beruht, erfüllt, und
ein Alarmmeldemodul (235), das betrieben werden kann, um die Alarmbedingung zu melden, wenn die mindestens eine Alarmbedingung das mindestens eine identifizierte Alarmfilterkriterium erfüllt.

9. System nach Anspruch 8, wobei der Alarmbedingungsdetektor (220) ferner betrieben werden kann, um ein Bedeutungsniveau, das mit der mindestens einen Alarmbedingung zusammenhängt, zu bestimmen, und Bestimmen, ob die mindestens eine Alarmbedingung, die das mindestens eine identifizierte Alarmfilterkriterium erfüllt, mindestens zum Teil auf dem Bedeutungsniveau beruht.

10. System nach Anspruch 8, wobei der Alarmbedingungsdetektor (220) eine potentielle Alarmbedingung identifiziert.

11. System nach Anspruch 8, wobei der Alarmbedingungsdetektor (220) ferner betrieben werden kann, um einen Gefahrenniveau, das mit einer potentiellen Alarmbedingung zusammenhängt, zu bestimmen.

12. System nach Anspruch 8, wobei:
der erste Bestandteil durch ein erstes Objekt (305, 307, 309, 311, 313, 315, 317, 319) dargestellt ist;
ein zweiter Bestandteil des unternehmenscomputersystems (150) von einem zweiten Objekt (305, 307, 309, 311, 313, 315, 317, 319) dargestellt ist, wobei der zweite Bestandteil eine Beziehung mit dem ersten Bestandteil hat, wobei das zweite Objekt von dem ersten Objekt abhängt, wobei das zweite Objekt mit einem bestimmten Schwereniveau verbunden ist, und
das Bestimmen des schwereniveaus, das mit der Alarmbedingung zusammenhängt, auf dem besonderen Schwereniveau, das mit dem zweiten Objekt zusammenhängt, beruht.

13. System nach Anspruch 8, wobei das Alarmbedingungsfilter betrieben werden kann, um eine Eigenschaft eines ersten Objekts (305, 307, 309, 311, 313, 315, 317, 315) zu einer Eigenschaft eines zweiten Objekts (305, 307, 309, 311, 313, 315, 317, 319) beruhend auf einer Abhängigkeitsbeziehung zwischen dem ersten und dem zweiten Objekt derart zu verbreiten, dass das zweite Objekt die Eigenschaft des ersten Objekts erbt, wobei das erste und das zweite Objekt einen ersten und einen zweiten Bestandteil des Unternehmenscomputersystems (150) darstellen.

14. System nach Anspruch 8, wobei das Alarmbedingungsfilter betrieben werden kann, um eine Eigenschaft eines ersten Objekts (305, 307, 309, 311, 313, 315, 317, 319) zu einer Eigenschaft eines zweiten Objekts (305, 307, 309, 311, 313, 315, 317, 319) beruhend auf einer Einschließungsbeziehung zwischen dem ersten und dem zweiten Objekt derart zu verbreiten, dass das zweite Objekt die Eigenschaft des ersten Objekts erbt, wobei das erste und das zweite Objekt einen ersten und einen zweiten Bestandteil des Unternehmenscomputersystems (150) darstellen.

15. Computerlesbares Speichermedium, das Code zum Melden einer Alarmbedingung enthält, wobei der Code betrieben werden kann, um das Verfahren eines der Ansprüche 1 bis 7 auszuführen.

## Revendications

1. Procédé destiné à signaler un état d'alerte à l'intérieur d'un système informatique d'entreprise, comprenant :
la définition (405) des critères de filtre d'alerte, dans lequel un critère de filtre d'alerte particulier est associé à un identifiant de groupe qui indique un composant dudit système informatique d'entreprise (150) ;
l'identification d'un état d'alerte associé à un premier composant du système informatique d'entreprise (150) ;
la détermination d'un niveau d'urgence, d'un niveau de gravité, et d'au moins un identifiant de groupe associé à l'état d'alerte ;
l'identification d'au moins un critère de filtre d'alerte associé à le au moins un identifiant de groupe déterminé ;
la détermination permettant de savoir si l'état d'alerte répond à le au moins un critère de filtre d'alerte identifié sur la base, au moins en partie, du niveau d'urgence ou du niveau de gravité ; et
si l'état d'alerte répond à le au moins un critère de filtre d'alerte identifié, signaler l'état d'alerte.

2. Procédé selon la revendication 1, comprenant en outre la détermination d'un niveau d'importance associé à l'état d'alerte, dans lequel la détermination qui permet de savoir si l'état d'alerte répond à le au moins un critère de filtre d'alerte identifié, est basée, au moins en partie, sur le niveau d'importance.

3. Procédé selon la revendication 1, dans lequel l'identification d'un état d'alerte comprend l'identification d'un état d'alerte potentiel.

4. Procédé selon la revendication 1, comprenant en outre :
la détermination d'un niveau de risque associé à l'état d'alerte, dans lequel la détermination qui permet de savoir si l'état d'alerte répond à le au moins un critère de filtre d'alerte identifié, est basée, au moins en partie, sur le niveau de risque.

5. Procédé selon la revendication 1, dans lequel :
le premier composant est représenté par un premier objet (305, 307, 309, 311,313,315,317,319);
un second composant du système informatique d'entreprise (150) est représenté par un second objet (305, 307, 309, 311, 313, 315, 317, 319), le second composant présentant une relation avec le premier composant, le second objet dépendant du premier objet, le second objet étant associé à un niveau de gravité particulier ; et
la détermination du niveau de gravité associé à l'état d'alerte est basée sur le niveau de gravité particulier associé au second objet.

6. Procédé selon la revendication 1, dans lequel l'identification de l'état d'alerte comprend :
l'identification d'un premier objet (305, 307, 309, 311, 313, 315, 317, 319) qui représente le premier composant associé à l'état d'alerte ;
l'identification d'un second objet (305, 307, 309, 311, 313, 315, 317, 319) qui représente un second composant dans le système informatique d'entreprise (150) qui présente une relation de dépendance avec le premier composant ; et
la propagation d'une propriété du second objet vers le premier objet de sorte que le premier objet hérite de la propriété du second objet.

7. Procédé selon la revendication 1, dans lequel l'identification d'un état d'alerte comprend :
l'identification d'un premier objet (305, 307, 309, 311, 313, 315, 317, 319) qui représente le premier composant associé à l'état d'alerte ;
l'identification d'un second objet (305, 307, 309, 311, 313, 315, 317, 319) qui représente un second composant dans le système informatique d'entreprise (150) qui présente une relation de confinement avec le premier composant ; et
la propagation d'une propriété du premier objet vers le second objet de sorte que le second objet hérite de la propriété du premier objet.

8. Système destiné à signaler un état d'alerte (331) comprenant :
un module de mise à jour de critères de filtre (205) fonctionnel pour mettre à jour des critères de filtre d'alerte, dans lequel un critère de filtre d'alerte particulier est associé à un identifiant de groupe qui indique un composant d'un système informatique d'entreprise (150) ;
un détecteur d'état d'alerte (220) fonctionnel pour :
identifier au moins un état d'alerte associé à un composant du système informatique d'entreprise (150),
déterminer un niveau d'urgence, un niveau de gravité, et au moins un identifiant de groupe associé à le au moins un état d'alerte ;
un filtre d'état d'alerte fonctionnel pour :
identifier au moins un critère de filtre d'alerte associé à le au moins un identifiant de groupe ; et
déterminer si le au moins un état d'alerte répond à le au moins un critère de filtre d'alerte identifié sur la base, au moins en partie, du niveau d'urgence ou du niveau de gravité ; et
un module de notification d'alerte (235) fonctionnel pour signaler l'état d'alerte si le au moins un état d'alerte répond à le au moins un critère de filtre d'alerte identifié.

9. Système selon la revendication 8, dans lequel le détecteur d'état d'alerte (220) est en outre fonctionnel pour déterminer un niveau d'importance associé à le au moins un état d'alerte ; et
la détermination qui permet de savoir si le au moins un état d'alerte répond à le au moins un critère de filtre d'alerte identifié est basée, au moins en partie, sur le niveau d'importance.

10. Système selon la revendication 8, dans lequel le détecteur d'état d'alerte (220) identifie un état d'alerte potentiel.

11. Système selon la revendication 8, dans lequel le détecteur d'état d'alerte (220) est en outre fonctionnel pour déterminer un niveau de risque associé à l'état d'alerte potentiel.

12. Système selon la revendication 8, dans lequel :
le premier composant est représenté par un premier objet (305, 307, 309, 311, 313, 315, 317, 319) ;
un second composant du système informatique d'entreprise (150) est représenté par un second objet (305, 307, 309, 311, 313, 315, 317, 319), le second composant présentant une relation avec le premier composant, le second objet dépendant du premier objet, le second objet étant associé à un niveau de gravité particulier; et
la détermination du niveau de gravité associé à l'état d'alerte est basée sur le niveau de gravité particulier associé au second objet.

13. Système selon la revendication 8, dans lequel le filtre d'état d'alerte est fonctionnel pour propager une propriété d'un premier objet (305, 307, 309, 311, 313, 315, 317, 319) vers une propriété d'un second objet (305, 307, 309, 311, 313, 315, 317, 319) sur la base d'une relation de dépendance entre les premier et second objets de sorte que le second objet hérite de la propriété du premier objet, dans lequel les premier et second objets représentent des premier et second composants du système informatique d'entreprise (150).

14. Système selon la revendication 8, dans lequel le filtre d'état d'alerte est fonctionnel pour propager une propriété d'un premier objet (305, 307, 309, 311, 313, 315, 317, 319) vers une propriété d'un second objet (305, 307, 309, 311, 313, 315, 317, 319) sur la base d'une relation de confinement entre les premier et second objets de sorte que le second objet hérite de la propriété du premier objet, dans lequel les premier et second objets représentent des premier et second composants du système informatique d'entreprise (150).

15. Support de stockage lisible par un ordinateur, comprenant un code destiné à signaler un état d'alerte, le code étant fonctionnel pour exécuter le procédé selon l'une quelconque des revendications 1 à 7.
